# EUROPÄISCHE PATENTSCHRIFT

(11) **EP 3 830 005 B1**
(45) Veröffentlichungstag und Bekanntmachung des Hinweises auf die Patenterteilung: **03.09.2025**
(21) Anmeldenummer: 19731279.6
(22) Anmeldetag: 17.06.2019
(51) Int. Cl.: B65G 15/42, B01D 33/04, B29D 29/06, F16G 1/28

(54) **FÖRDERGURT ODER RIEMEN**
CONVEYOR BELT OR STRAP
BANDE TRANSPORTEUSE OU COURROIE

(30) Priorität: 30.07.2018 DE 102018212638
(43) Veröffentlichungstag der Anmeldung: 09.06.2021
(73) Patentinhaber: ContiTech Deutschland GmbH, 30175 Hannover (DE)
(72) Erfinder: BEHRENS, Carsten, 30165 Hannover (DE); STÄNDER, Tobias, 30165 Hannover (DE); SCHLOMSKI, Jens, 30165 Hannover (DE)
(74) Vertreter: Preusser, Andrea
(86) Internationale Anmeldenummer: PCT/EP2019/065801
(87) Internationale Veröffentlichungsnummer: WO 2020/025215

(56) Entgegenhaltungen:
- CN-U- 202 186 686
- DE-A1- 102009 025 911
- DE-A1- 102013 109 769
- DE-A1- 4 203 349
- GB-A- 1 104 437

## Beschreibung

Die vorliegende Erfindung betrifft einen Fördergurt oder Riemen, gemäß des Oberbegriffs des Patentanspruchs 1.

Auf dem Gebiet der Fördergurte sind sog. Filtergurte bekannt, welche der Abführung von Flüssigkeiten aus dem Fördergut dienen. Der endlos geschlossene Filtergurt wird auf einem Gurtförderer eingesetzt und von diesem in einer Förderrichtung bzw. Umlaufrichtung fortlaufend bewegt. Der Filtergurt gleitet mit seiner Unterseite über eine Vakuumkammer des Gurtförderers. Auf der Oberseite des Filtergurtes liegt ein Filtertuch auf, welches vom Filtergurt mitgetragen wird. Der Filtergurt hat in der Querrichtung Querrillen mit Löchern üblicherweise in der Gurtmitte. Da die Löcher nur im Bereich über der Vakuumkammer des Gurtförderers angeordnet sind, kann ein Unterdruck über die gesamte Gurtbreite gehalten werden. Hierdurch können Flüssigkeiten flächig durch das Filtertuch hindurch und in die Querrillen gelangen und von dort zur Mitte hin mittels der Vakuumkammer durch die Löcher des Filtergurtes abgeführt werden.

Der Filtergurt selbst weist üblicherweise einen elastomeren Basisgurt auf, welcher flächig in der Querrichtung von dem Gurtförderer getragen und in der Längsrichtung als Förderrichtung bzw. als Bewegungsrichtung bewegt wird. Der elastomere Basisgurt kann in der Umfangsrichtung, welches die Zugrichtung der Bewegung ist, durch einen textilen Zugträger verstärkt sein, um die Zugkräfte in Längsrichtung bzw. in der Umlaufrichtung aufzunehmen. Der textile Zugträger das elastomeren Basisgurts ist in der Umlaufrichtung endlos geschlossen und die Fasern des textilen Zugträgers sind in der Umlaufrichtung ausgerichtet.

An den beiden seitlichen Randbereichen des elastomeren Basisgurts in der Querrichtung sind üblicherweise Seitenprofile angeordnet, welche ebenfalls aus einem elastomeren Material ausgebildet sind und sich zumindest im Wesentlichen senkrecht von der dem Gurtförderer abgewandten Oberfläche des Filtergurtes, welche auch als Oberseite des Filtergurtes bezeichnet werden kann, weg erstrecken. Die Seitenprofile verhindern ein Überlaufen der Flüssigkeiten sowie des Fördergutes zur Seite des Filtergurtes. Ein derartiger Filtergurt samt Gurtförderer ist z.B. aus der DE 42 03 349 A1 bekannt.

Bisher ist es bei derartigen Filtergurten bekannt, die Seitenprofile auf die Oberseite des elastomeren Basisgurts mittels einer Haftschicht aufzubringen, welche als Zwischengummi von ca. 2 mm Stärke zwischen einer Unterseite des Seitenprofils und der Oberseite des elastomeren Basisgurts im Bereich der seitlichen Randbereiche aufgebracht wird.

Diese Haftschicht unterliegt im Betrieb starken Beanspruchungen, welche insbesondere durch die Dehnungen des Gurtes sowie der Seitenprofile bei der Umlenkung des Filtergurtes über Umlenk- bzw. Antriebsrollen auftreten. Mit anderen Worten kommt es bei jedem Umlauf an einer Umlenkrolle, Stützrollen, Tragrollen bzw. an einer Antriebsrolle zu einer radialen Dehnung und damit zu einer Streckbelastung der Seitenprofile. Auch unterliegen die Seitenprofile der Alterung bzw. der Materialermüdung sowie dem Verscheiß durch das Fördergut.

Hierdurch kann es im Laufe des Betriebs zur Ausbildung von Rissen in den Seitenprofilen kommen, welche sich bis in den elastomeren Basisgurt weiter fortsetzen können, sofern die Risse nicht zeitnah erkannt und repariert werden. Reparaturen sind jedoch üblicherweise nur unter erhöhten Aufwand an Zeit und Kosten möglich.

Durch das Einreißen der Seitenprofile bis in den elastomeren Basisgurt hinein kann z.B. Feuchtigkeit in den elastomeren Basisgurt eindringen. Dies kann eine Schädigung bis hin zur Zerstörung des vorzugsweise textilen Zugträgers zur Folge haben, was zum Reißen des Filtergurtes und damit zum vollständigen Ausfall des Gurtförderers führen kann. Ein derartiger Produktionsausfall kann zu erheblichen Kosten beim Betreiber des Gurtförderers führen. Auch sind die Kosten für eine Neubeschaffung, Montage und Inbetriebnahme eines neuen Filtergurtes zu beachten.

Bereits zuvor kann die Funktion des Filtergurtes verloren gehen, falls die Risse im elastomeren Basisgurt die Ausbildung des Vakuums verhindern. Ferner können die Risse in den Seitenprofilen zum Austritt von Flüssigkeit bzw. Fördergut führen.

Die DE 10 2009 025 911 A1 beschreibt einen Fördergurt nach dem Oberbegriff des Anspruchs 1. Der Fördergurt umfasst einen elastomerem Werkstoff, auf dessen tragseitiger Oberfläche mindestens ein einen Fußstreifen aufweisendes Aufbauteil angeordnet ist. Um ein Aufbauteil unter dauerhafter und fester Verbindung mit geringerem Aufwand auf dem Fördergurt zu befestigen, sind Aufbauteil und Fördergurt mit einem Klettbandverschluss zusammengefügt. Die Kontaktflächen des Fußstreifens und der tragseitigen Oberfläche des Fördergurtes weisen jeweils ein Wirkteil bzw. des Klettbandverschlusses auf. Zwischen diesen beiden Wirkteilen, den Klettbändern, ist eine Klebstoffschicht angeordnet, die den geschlossenen Klettbandverschluss unlösbar sichert.

Eine Aufgabe der vorliegenden Erfindung ist es, einen Fördergurt oder Riemen der eingangs beschriebenen Art bereit zu stellen, so dass die Lebensdauer des Fördergurtes oder Riemens erhöht werden kann. Insbesondere soll die Anbindung der Seitenprofile an das elastomere Basiselement verbessert werden. Zumindest soll eine Alternative zu bekannten Fördergurten oder Riemen bereitgestellt werden.

Die Aufgabe wird erfindungsgemäß durch einen Fördergurt oder Riemen mit den Merkmalen gemäß Patentanspruch 1. Vorteilhafte Weiterbildungen sind in den Unteransprüchen beschrieben.

Die vorliegende Erfindung betrifft somit einen Fördergurt oder Riemen mit einem in einer Längsrichtung endlos schließbaren oder endlos geschlossenen elastomeren Basiselement und mit wenigstens einem sich in der Längsrichtung erstreckenden Seitenprofil, welches auf der Oberseite des elastomeren Basiselements zumindest abschnittsweise angeordnet ist. Ein derartiger Fördergurt kann insbesondere als Filtergurt eingesetzt werden, wie eingangs beschrieben. Ein derartiger Fördergurt kann jedoch auch bei einem Schräg- oder Senkrechtförderer oder bei anderen Anwendungen von Fördergurten eingesetzt werden, bei denen Seitenprofile verwendet werden, um z.B. das Fördergut während des Transports in der Querrichtung auf der Oberseite des elastomeren Basisgurts des Fördergurtes zu halten. Ein derartiger Riemen kann z.B. als Aufzugsriemen, als Antriebsriemen und dergleichen eingesetzt werden.

Bei dem Fördergurt oder Riemen ist zwischen einer Unterseite des Seitenprofils und der Oberseite des elastomeren Basiselements eine Haftschicht angeordnet. Diese Haftschicht ermöglicht eine stoffschlüssige Anbindung des Seitenprofils an dem elastomeren Basiselement. Die Haftschicht kann vorzugsweise ein elastomeres Material aufweisen, sodass das Seitenprofil auf die Oberseite des elastomeren Basiselements aufvulkanisiert werden kann. Hierbei ist es nicht von Belang, ob es sich um eine heiße oder kalte Vernetzung (Vulkanisation) handelt. Alternativ kann die Haftschicht vorzugsweise als dünne flächige Klebeschicht ausgebildet sein.

Die Haftschicht weist wenigstens ein textiles Flächengebilde mit wenigstens einer Faser auf, welche zumindest abschnittsweise, vorzugsweise vollständig, sowohl ungleich der Längsrichtung des Fördergurtes oder Riemens als auch ungleich der Querrichtung des Fördergurtes oder Riemens ausgerichtet ist. Mit anderen Worten ist das textile Flächengebilde dazu ausgebildet, wenigstens eine Faser aufzuweisen, welche weder in der Längsrichtung noch in die Querrichtung des Fördergurtes oder Riemens als dessen Bewegungs- bzw. Zugrichtung verläuft sondern eine abweichende Ausrichtung aufweist.

Mittels dieser Faser können somit Belastungen aufgenommen werden, welche nicht nur in der Längsrichtung des Fördergurtes oder Riemens sondern auch in der Querrichtung auftreten. Somit kann eine Dehnbarkeit sowohl in der Längsrichtung als auch in der Querrichtung erreicht werden, wodurch derartige Belastungen aufgenommen und von dem elastomeren Basiselement zumindest teilweise ferngehalten werden können. Derartige Belastungen können z.B. bei einem Fördergurt bei jedem Umlauf an einer Umlenkrolle bzw. an einer Antriebsrolle der Fördergurtanlage auftreten und zu einer radialen Dehnung und damit zu einer Streckbelastung der Seitenprofile des Fördergurtes und der sich darunter befindlichen Haftschicht führen. Diese Streckbelastungen können durch eine derart ausgerichtete Faser des textilen Flächengebildes der Haftschicht erfindungsgemäß aufgenommen werden, so dass die Rissbildung im Basisgurt reduziert oder sogar vermieden werden kann. In jedem Fall kann die Haltbarkeit und die Langlebigkeit des Fördergurtes verbessert werden. Dies gilt entsprechend auch für andere flächige Elastomerelemente wie z.B. Riemen.

Auch können auftretende Beschädigungen auf die Seitenprofile beschränkt werden. Hierdurch können Reparaturen vermieden bzw. falls erforderlich schneller und bzw. oder einfacher ausgeführt werden, weil diese üblicherweise dann nur die Seitenprofile und nicht den Basisgurtkörper des elastomeren Basisgurts betreffen werden. Insgesamt kann die Verfügbarkeit der entsprechenden Fördergurtanlage erhöht werden. Dies gilt entsprechend auch für andere flächige Elastomerelemente wie z.B. Riemen.

Auch kann die Herstellung eines derartigen Fördergurtes vergleichsweise einfach und damit kostengünstig erfolgen, indem das textile Flächengebildes der Haftschicht als vorkonfektionierte Lage durch einfaches Abwickeln auf die Oberseite des elastomeren Basisgurts aufgebracht werden kann. Dies gilt entsprechend auch für andere flächige Elastomerelemente wie z.B. Riemen.

Erfindungsgemäß weist das textile Flächengebilde ein Gewebe mit einer Mehrzahl an Kettfäden auf, welche sich zumindest im Wesentlichen in der Längsrichtung des Fördergurtes oder Riemens erstrecken, wobei das Gewebe wenigstens einen Schussfaden aufweist, welcher in einem Winkel schräg zur Querrichtung verläuft. Hierdurch können die zuvor beschriebenen Eigenschaften und Vorteile mittels eines Gewebes realisiert werden. Ein Gewebe als textiles Flächengebilde zu verwenden kann dahingehend vorteilhaft sein, dass die Ausrichtung der Fäden des Gewebes definiert und reproduzierbar vorgegeben werden kann, so dass auch die sich hieraus ergebenden Eigenschaften entsprechend definiert werden können. Dabei nicht wie bisher bekannt ein Gewebe mit quer ausgerichteten Schussfaden zu verwenden sondern den Schussfaden in einem vorbestimmten Winkel schräg zur Querrichtung verlaufen zu lassen kann eine definierte Möglichkeit bieten, eine vorbestimmte Dehnbarkeit des textilen Flächengewebes in der Längsrichtung sowie in der Querrichtung zu erreichen, wie zuvor beschrieben.

Gemäß einer Ausführungsform der vorliegenden Erfindung verläuft der Schussfaden in einem Winkel von wenigstens ca. 30°, vorzugsweise von ca. 45°, zur Querrichtung. Mit einer derartigen Ausrichtung des Schussfadens schräg zur Querrichtung können die zuvor beschriebenen Eigenschaften und Vorteile besonders wirkungsvoll erreicht werden. Insbesondere bei einer Ausrichtung in einem Winkel von ca. 45° kann eine gleichmäßige Dehnbarkeit sowohl in der Längsrichtung als auch in der Querrichtung erreicht werden.

Gemäß einer weiteren Ausführungsform der vorliegenden Erfindung ist wenigstens ein Kettfaden, vorzugsweise sind alle Kettfäden, ausgebildet, sich bei der Vulkanisation des Fördergurtes oder Riemens aufzulösen. Dies kann durch eine entsprechende Auswahl des Materials des Kettfadens erfolgen. Auf diese Art und Weise kann der Kettfaden bei dem Aufbringen der Haftschicht eine stabilisierende Wirkung auf den Schussfaden haben, sich anschließend jedoch auflösen und hierdurch jegliche Wirkung verlieren. Die Übertragung von Kräften kann dann ausschließlich über den Schussfaden wie zuvor beschrieben erfolgen.

Gemäß einer weiteren Ausführungsform der vorliegenden Erfindung ist wenigstens ein Kettfaden, vorzugsweise sind alle Kettfäden, aus dem elastomeren Material des elastomeren Basiselements ausgebildet. Auf diese Art und Weise kann ein vergleichbarer Effekt wie zuvor beschrieben erreicht werden, da der Kettfaden in das elastomere Basiselement übergeht und hierdurch ebenfalls die Übertragung von Kräften dann ausschließlich über den Schussfaden wie zuvor beschrieben erfolgt.

Gemäß einer weiteren Ausführungsform der vorliegenden Erfindung weist wenigstens ein Kettfaden, vorzugsweise weisen alle Kettfäden, wenigstens dieselbe Elastizität, vorzugsweise eine höhere Elastizität, als das elastomere Material des elastomeren Basiselements auf. Auch auf diese Art und Weise kann erreicht werden, dass die Übertragung von Kräften ausschließlich über den Schussfaden wie zuvor beschrieben erfolgt, da die Dehnbarkeit der Kettfäden zur Übertragung von Kräften zu groß ist.

Gemäß einer weiteren Ausführungsform der vorliegenden Erfindung ist wenigstens ein Kettfaden, vorzugsweise sind alle Kettfäden, ausgebildet, unter Biegebelastung, vorzugsweise fein-/kurzfaserig, zu brechen. Dies kann durch eine entsprechende Auswahl des Materials des Kettfadens erfolgen. Eine derartige Biegebelastung kann z.B. durch Umlenkung des Fördergurtes oder Riemens z.B. als Fördergurt oder als Riemen an einer Umlenk- oder Antriebsrolle erfolgen. Auch hierdurch kann erreicht werden, dass die Übertragung von Kräften ausschließlich über den Schussfaden wie zuvor beschrieben erfolgt. Durch die fein- bzw. kurzfaserige Brüchigkeit der Kettfäden, welche durch eine entsprechende Materialwahl erreicht werden kann, kann sichergestellt werden, dass die gebrochenen Kettfäden möglichst wenig bis gar keine Kräfte mehr übertragen können, so dass dies ausschließlich über den Schussfaden erfolgt.

Gemäß einer weiteren Ausführungsform der vorliegenden Erfindung ist das Seitenprofil ein endlos geschlossenes Seitenprofil. Auf diese Art und Weise kann ein Fördergut über die gesamte Erstreckung des Seitenprofils durch dieses seitlich auf der Oberseite des elastomeren Basisgurts gehalten werden. Gleichzeitig können sich die zuvor beschriebenen Eigenschaften und Vorteile der Haftschicht über die gesamte Erstreckung des Seitenprofils positiv auswirken.

Gemäß einer weiteren Ausführungsform der vorliegenden Erfindung weist die Haftschicht ein elastomeres Material auf, in welches das textile Flächengebilde zumindest abschnittsweise, vorzugsweise vollständig, eingebettet ist. Hierdurch kann eine stoffschlüssige Anbindung des Seitenprofils an die Oberseite des elastomeren Basisgurts durch Vulkanisation wie bisher bekannt erfolgen und gleichzeitig die zuvor beschriebenen Eigenschaften und Vorteile des textilen Flächengebildes in dieser Haftschicht genutzt werden.

Gemäß einer weiteren Ausführungsform der vorliegenden Erfindung weist das elastomere Basiselement wenigstens abschnittsweise wenigstens einen textilen Zugträger auf, welcher ausgebildet ist, Zugkräfte wenigstens in der Längsrichtung des Fördergurtes oder Riemens aufzunehmen. Hierdurch können Zugkräfte in der Bewegungsrichtung des Fördergurtes oder Riemens aufgenommen werden, um das Material des elastomeren Basiselements von diesen Belastungen zu entlasten, was die Haltbarkeit und Langlebigkeit des Fördergurtes oder Riemens erhöhen kann.

Gemäß einer weiteren Ausführungsform der vorliegenden Erfindung ist der textile Zugträger in das elastomeren Basiselement eingebettet. Hierdurch kann eine besonders haltbare Verbindung zwischen dem textilen Zugträger und dem Material des elastomeren Basiselements geschaffen werden. Auch können Kräfte zwischen dem textilen Zugträger und dem Material des elastomeren Basiselements hierdurch besonders wirkungsvoll übertragen werden.

Gemäß einer weiteren Ausführungsform der vorliegenden Erfindung weist das elastomere Basiselement in der Querrichtung jeweils einen seitlichen Randbereich auf, welche sich in der Längsrichtung erstrecken, wobei auf der Oberseite jedes seitlichen Randbereichs des elastomeren Basiselements ein Seitenprofil angeordnet ist. Hierdurch kann ein möglichst breiter Bereich der Oberseite des elastomeren Basiselements für die Aufnahme eines Förderguts zwischen den Seitenprofilen genutzt werden.

Gemäß einer weiteren Ausführungsform der vorliegenden Erfindung ist der Fördergurt als Filtergurt ausgebildet und weist eine Mehrzahl von Querrillen auf, welche sich jeweils zumindest abschnittsweise in der Querrichtung erstrecken und welche in der Längsrichtung zueinander beabstandet angeordnet sind. Hierdurch können die zuvor beschriebenen Eigenschaften und Vorteile bei einem Filtergurt als Anwendung genutzt werden.

Die erfindungsmäßige Ausgestaltung des textilen Flächengebildes als ein Gewebe mit einer Mehrzahl an Kettfäden, welche sich zumindest im Wesentlichen in der Längsrichtung des Fördergurtes oder Riemens erstrecken, wobei das Gewebe wenigstens einen Schussfaden aufweist, welcher in einem Winkel schräg zur Querrichtung verläuft, kann dahingehend vorteilhaft sein, dass der Fördergurt oder Riemen in der Längsrichtung vergleichsweise lang und durchgängig ausgebildet werden und in einer entsprechenden Länge "am Stück" hergestellt und verwendet werden kann. Dies kann die Anwendung vereinfachen sowie eine möglichst durchgängige Nutzung der zuvor beschriebenen Eigenschaften und Vorteile in der Längsrichtung eines Fördergurtes oder Riemens ermöglichen.

Ein Ausführungsbeispiel und weitere Vorteile der Erfindung werden nachstehend im Zusammenhang mit den folgenden Figuren erläutert. Darin zeigt:

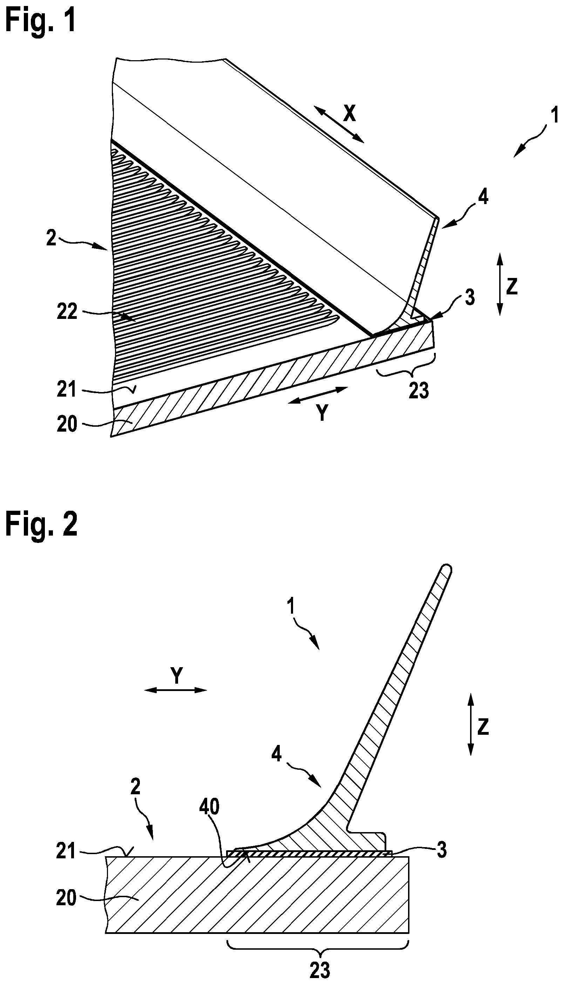

- Fig. 1: eine perspektivische schematische Schnittdarstellung eines erfindungsgemäßen Fördergurtes von schräg oben;
- Fig. 2: die Darstellung der Fig. 1 als Querschnitt;

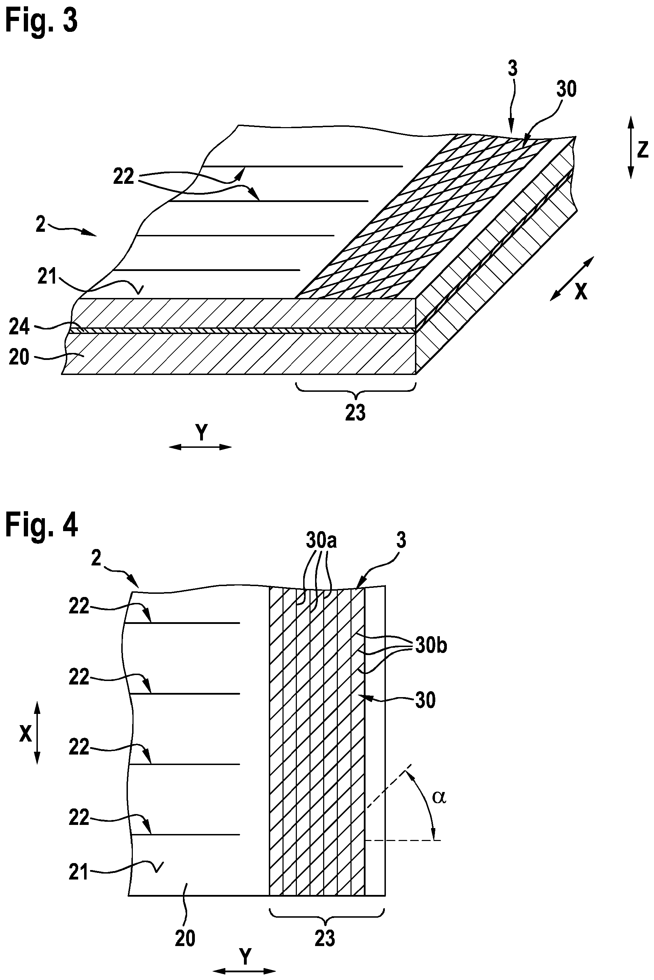

- Fig. 3: eine perspektivische schematische Schnittdarstellung eines erfindungsgemäßen Fördergurtes ohne Seitenprofil von schräg oben; und
- Fig. 4: die Darstellung der Fig. 3 von oben.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

Der erfindungsgemäße Fördergurt 1 wird insbesondere als Filtergurt 1 betrachtet. Der Filtergurt 1 weist ein elastomeres Basiselement 2 in Form eines elastomeren Basisgurts 2 mit zwei Seitenprofilen 4 auf, welche jeweils mittels einer Haftschicht 3 auf dem elastomeren Basisgurt 2 gehalten werden.

Der elastomere Basisgurt 2 weist einen Basiselementkörper 20 als Basisgurtkörper 20 auf, welcher aus einem vulkanisierten elastomeren Material wie vorzugsweise Gummi besteht und in der Längsrichtung X, welche der Bewegungsrichtung bzw. Förderrichtung entspricht, endlos schließbar ist bzw. im Betrieb endlos geschlossen ist. Zur Übertragung von Zugkräften in der Längsrichtung X ist ein textiler Zugträger 24 in Form eines üblichen Gewebes 24 mit in der Längsrichtung X verlaufenden Kettfäden und einem in der Querrichtung verlaufenden Schussfaden (nicht dargestellt) in dem elastomeren Material des Basisgurtkörpers 20 eingebettet.

Der elastomere Basisgurt 2 bzw. dessen Basisgurtkörper 20 weist eine Oberseite 21 auf, welche im Betrieb das Fördergut aufnehmen kann und den Antriebsrollen sowie Umlenkrollen einer Fördergurtanlage abgewandt ist. Aufgrund der Anwendung des erfindungsgemäßen Fördergurtes 1 als Filtergurt 1 weist der elastomere Basisgurt 2 bzw. dessen Basisgurtkörper 20 auf seiner Oberseite 21 eine Mehrzahl von in der Querrichtung Y im mittleren Bereich verlaufenden Querrillen 22 auf, welche der Abfuhr von Flüssigkeit zur Mitte hin dienen, um die Flüssigkeit dort radial durch den Basisgurtkörper 20 abzuführen (nicht dargestellt).

In der Querrichtung Y jeweils links und rechts von den Querrillen 22 werden seitliche Randbereiche 23 auf der Oberseite 21 des Basisgurtkörpers 20 ausgebildet, welche frei von den Querrillen 22 sind und sich in der Längsrichtung X durchgängig erstrecken. Auf den beiden seitlichen Randbereichen 23 ist jeweils ein Seitenprofil 4 als Filtergurt-Kante 4 angeordnet, welche jeweils aus einem elastomeren Material bestehen und sich im Wesentlichen radial von der Oberseite 21 des elastomeren Basisgurts 2 bzw. von dessen Basisgurtkörper 20 weg erstrecken. Die Seitenprofile 4 sind endlos geschlossen in der Längsrichtung X umlaufend ausgebildet. Die Seitenprofile 4 dienen dazu, um im Betrieb das Fördergut in der Querrichtung Y auf der Oberseite 21 des elastomeren Basisgurts 2 zu halten.

Die Seitenprofile 4 weisen jeweils eine ebene Unterseite 40 auf, mit welcher sie jeweils mittels der Haftschicht 3 auf dem entsprechenden Randbereich 23 des elastomeren Basisgurts 2 angeordnet sind. Die Haftschicht 3 weist ein elastomeres Material auf, so dass durch Vulkanisieren eine stoffschlüssige Verbindung zwischen der Oberseite 21 des elastomeren Basisgurts 2 und der Unterseite 40 des jeweiligen Seitenprofils 4 über die Haftschicht 3 hergestellt werden kann. Die Haftschicht 3 kann daher auch als elastomere Haftschicht 3 bezeichnet werden. Ein derartiger Aufbau eines Filtergurtes 1 ist bekannt.

Erfindungsgemäß ist ein textiles Flächengebilde 30 in das elastomere Material der Haftschicht 3 eingebettet, wobei wenigstens eine Faser 30b zumindest teilweise ungleich der Längsrichtung X des Filtergurtes 1 ausgerichtet ist. Das textile Flächengebilde 30 ist als Gewebe 30 ausgebildet und weist eine Mehrzahl von in der Längsrichtung X verlaufenden Kettfäden 30a auf, welche vorzugsweise endlos in der Längsrichtung X geschlossen sind. Der Schussfaden 30b ist erfindungsgemäß schräg zur Querrichtung Y in einem Winkel α von ca. 45° ausgerichtet.

Hierdurch können Belastungen und insbesondere Dehnungen sowohl in der Längsrichtung X als auch in der Querrichtung Y von dem Gewebe 30 aufgenommen werden, welche nicht in der Längsrichtung X des Filtergurtes 1 sondern zumindest teilweise in der Querrichtung Y auftreten können. Auf diese Art und Weise kann die Einleitung von Rissen von den Seitenprofilen 4 in den Basisgurtkörper 20 sowie ein Fortschreiten der Rissbildung im Basisgurtkörper 20 verhindert oder zumindest reduziert werden. Dies kann die Haltbarkeit und die Langlebigkeit des Filtergurtes 1 verbessern.

### Bezugszeichenliste (Teil der Beschreibung)

- α: Winkel des Schussfadens 30b schräg zur Querrichtung Y
- X: Längsrichtung; Tiefe
- Y: Querrichtung; Breite
- Z: vertikale Richtung; Höhe

- 1: flächiges Elastomerelement; Fördergurt; Riemen; Filtergurt

- 2: elastomeres Basiselement; elastomerer Basisgurt
- 20: Basiselementkörper; Basisgurtkörper
- 21: Oberseite des elastomeren Basiselementkörpers 2
- 22: Querrillen der Oberseite 21
- 23: seitliche Randbereiche des elastomeren Basiselementkörpers 2
- 24: textiler Zugträger des elastomeren Basiselementkörpers 2

- 3: Elastomerelement; (elastomere) Haftschicht
- 30: textiles Flächengebilde; Gewebe; Gestrick; Gewirk; Geflecht; Gelege
- 30a: Kettfäden
- 30b: Schussfäden

- 4: Seitenprofile; (Filtergurt-)Kanten
- 40: Unterseite der Seitenprofile 4

## Patentansprüche

1. Fördergurt (1) oder Riemen (1),
mit einem in einer Längsrichtung (X) endlos schließbaren oder endlos geschlossenen elastomeren Basiselement (2), und
mit wenigstens einem sich in der Längsrichtung erstreckenden Seitenprofil (4), welches auf der Oberseite (21) des elastomeren Basiselements (2) zumindest abschnittsweise angeordnet ist,
wobei zwischen einer Unterseite (40) des Seitenprofils (4) und der Oberseite (21) des elastomeren Basiselements (2) eine Haftschicht (3) angeordnet ist,
wobei die Haftschicht (3) wenigstens ein textiles Flächengebilde (30) mit wenigstens einer Faser (30b) aufweist, welche zumindest abschnittsweise, vorzugsweise vollständig, sowohl ungleich der Längsrichtung (X) des Fördergurts (1) oder Riemens (1) als auch ungleich der Querrichtung (Y) des Fördergurts (1) oder Riemens (1) ausgerichtet ist,
wobei das textile Flächengebilde (30) ein Gewebe (30) aufweist, **dadurch gekennzeichnet, dass** das Gewebe (30) eine Mehrzahl an Kettfäden (30a) aufweist, welche sich zumindest im Wesentlichen in der Längsrichtung (X) des Fördergurts (1) oder Riemens (1) erstrecken,
wobei das Gewebe (30) wenigstens einen Schussfaden (30b) aufweist, welcher in einem Winkel (α) schräg zur Querrichtung (Y) verläuft.

2. Fördergurt (1) oder Riemen (1) nach Anspruch 1, **dadurch gekennzeichnet, dass** der Schussfaden (30b) in einem Winkel (α) von wenigstens ca. 30°, vorzugsweise von ca. 45°, zur Querrichtung (Y) verläuft.

3. Fördergurt (1) oder Riemen (1) nach Anspruch 1 oder 2, **dadurch gekennzeichnet, dass**
wenigstens ein Kettfaden (30a), vorzugsweise alle Kettfäden (30a), ausgebildet ist, sich bei der Vulkanisation des Fördergurts (1) oder Riemens (1) aufzulösen.

4. Fördergurt (1) oder Riemen (1) nach Anspruch 1 oder 2, **dadurch gekennzeichnet, dass**
wenigstens ein Kettfaden (30a), vorzugsweise alle Kettfäden (30a), aus dem elastomeren Material des elastomeren Basiselements (2) ausgebildet ist.

5. Fördergurt (1) oder Riemen (1) nach Anspruch 1, 2 oder 4, **dadurch gekennzeichnet, dass**
wenigstens ein Kettfaden (30a), vorzugsweise alle Kettfäden (30a), wenigstens dieselbe Elastizität, vorzugsweise eine höhere Elastizität, als das elastomere Material des elastomeren Basiselements (2) aufweist.

6. Fördergurt (1) oder Riemen (1) nach Anspruch 1 oder 2, **dadurch gekennzeichnet, dass**
wenigstens ein Kettfaden (30a), vorzugsweise alle Kettfäden (30a), ausgebildet ist, unter Biegebelastung, vorzugsweise fein-/kurzfaserig, zu brechen.

7. Fördergurt (1) oder Riemen (1) nach einem der vorangehenden Ansprüche, **dadurch gekennzeichnet, dass**
das Seitenprofil (4) ein endlos geschlossenes Seitenprofil (4) ist.

8. Fördergurt (1) oder Riemen (1) nach einem der vorangehenden Ansprüche, **dadurch gekennzeichnet, dass**
die Haftschicht (3) ein elastomeres Material aufweist, in welches das textile Flächengebilde (30) zumindest abschnittsweise, vorzugsweise vollständig, eingebettet ist.

9. Fördergurt (1) oder Riemen (1) nach einem der vorangehenden Ansprüche, **dadurch gekennzeichnet, dass**
das elastomere Basiselement (2) wenigstens abschnittsweise wenigstens einen textilen Zugträger (24) aufweist, welcher ausgebildet ist, Zugkräfte wenigstens in der Längsrichtung (X) des Fördergurts (1) oder Riemens (1) aufzunehmen.

10. Fördergurt (1) oder Riemen (1) nach Anspruch 9, **dadurch gekennzeichnet, dass** der textile Zugträger (24) in das elastomere Basiselement (2) eingebettet ist.

11. Fördergurt (1) oder Riemen (1) nach einem der vorangehenden Ansprüche, **dadurch gekennzeichnet, dass**
das elastomere Basiselement (2) in der Querrichtung (Y) jeweils einen seitlichen Randbereich (23) aufweist, welche sich in der Längsrichtung (X) erstrecken,
wobei auf der Oberseite (21) jedes seitlichen Randbereichs (23) des elastomeren Basiselements (2) ein Seitenprofil (4) angeordnet ist.

12. Fördergurt (1) oder Riemen (1) nach einem der vorangehenden Ansprüche, **dadurch gekennzeichnet, dass**
der Fördergurt (1) oder Riemen (1) als Filtergurt (1) ausgebildet ist und eine Mehrzahl von Querrillen (22) aufweist, welche sich jeweils zumindest abschnittsweise in der Querrichtung (Y) erstrecken und welche in der Längsrichtung (X) zueinander beabstandet angeordnet sind.

## Claims

1. Conveyor belt (1) or belt (1),
having an elastomeric base element (2), which can be or is endlessly closed in a longitudinal direction (X), and
having at least one side profile (4), which extends in the longitudinal direction and is at least partly arranged on the upper side (21) of the elastomeric base element (2),
wherein an adhesive layer (3) is arranged between an underside (40) of the side profile (4) and the upper side (21) of the elastomeric base element (2),
wherein the adhesive layer (3) comprises at least one textile sheet-like structure (30) having at least one fibre (30b), which is at least partly, preferably completely, oriented both differently from the longitudinal direction (X) of the conveyor belt (1) or belt (1) and differently from the transverse direction (Y) of the conveyor belt (1) or belt (1),
wherein the textile sheet-like structure (30) comprises a woven fabric (30), **characterized in that** the woven fabric (30) comprises a plurality of warp threads (30a), which extend at least substantially in the longitudinal direction (X) of the conveyor belt (1) or belt (1),
wherein the woven fabric (30) comprises at least one weft thread (30b), which runs obliquely at an angle (α) to the transverse direction (Y).

2. Conveyor belt (1) or belt (1) according to Claim 1, **characterized in that**
the weft thread (30b) runs at an angle (α) of at least about 30°, preferably of about 45°, to the transverse direction (Y).

3. Conveyor belt (1) or belt (1) according to Claim 1 or 2, **characterized in that**
at least one warp thread (30a), preferably all of the warp threads (30a), is/are designed to disintegrate during the vulcanization of the conveyor belt (1) or belt (1).

4. Conveyor belt (1) or belt (1) according to Claim 1 or 2, **characterized in that** at least one warp thread (30a), preferably all of the warp threads (30a), is/are formed from the elastomeric material of the elastomeric base element (2).

5. Conveyor belt (1) or belt (1) according to Claim 1, 2 or 4, **characterized in that** at least one warp thread (30a), preferably all of the warp threads (30a), has/have at least the same elasticity, preferably a greater elasticity, than the elastomeric material of the elastomeric base element (2).

6. Conveyor belt (1) or belt (1) according to Claim 1 or 2, **characterized in that** at least one warp thread (30a), preferably all of the warp threads (30a), is/are designed to break under flexural loading, preferably into fine/short fibres.

7. Conveyor belt (1) or belt (1) according to one of the preceding claims,
**characterized in that**
the side profile (4) is an endlessly closed side profile (4).

8. Conveyor belt (1) or belt (1) according to one of the preceding claims,
**characterized in that**
the adhesive layer (3) comprises an elastomeric material in which the textile sheet-like structure (30) is at least partly, preferably completely, embedded.

9. Conveyor belt (1) or belt (1) according to one of the preceding claims,
**characterized in that**
the elastomeric base element (2) at least partly comprises at least one textile tension member (24), which is designed to absorb tensile forces at least in the longitudinal direction (X) of the conveyor belt (1) or belt (1).

10. Conveyor belt (1) or belt (1) according to Claim 9, **characterized in that** the textile tension member (24) is embedded in the elastomeric base element (2).

11. Conveyor belt (1) or belt (1) according to one of the preceding claims,
**characterized in that**
the elastomeric base element (2) comprises on each side in the transverse direction (Y) a lateral border region (23), which extend in the longitudinal direction (X),
wherein a side profile (4) is arranged on the upper side (21) of each lateral border region (23) of the elastomeric base element (2).

12. Conveyor belt (1) or belt (1) according to one of the preceding claims,
**characterized in that**
the conveyor belt (1) or belt (1) is designed as a filter belt (1) and comprises a plurality of transverse grooves (22), which respectively extend at least partly in the transverse direction (Y) and which are arranged spaced apart from one another in the longitudinal direction (X).

## Revendications

1. Bande transporteuse (1) ou courroie (1),
avec un élément de base élastomère (2) pouvant être fermé sans fin ou fermé sans fin dans une direction longitudinale (X), et
avec au moins un profilé latéral (4) s'étendant dans la direction longitudinale, qui est agencé sur le côté supérieur (21) de l'élément de base élastomère (2) au moins par sections,
une couche adhésive (3) étant agencée entre un côté inférieur (40) du profilé latéral (4) et le côté supérieur (21) de l'élément de base élastomère (2),
la couche adhésive (3) présentant au moins une structure textile plate (30) avec au moins une fibre (30b) qui est orientée au moins par sections, de préférence complètement, non seulement différemment de la direction longitudinale (X) de la bande transporteuse (1) ou de la courroie (1), mais aussi différemment de la direction transversale (Y) de la bande transporteuse (1) ou de la courroie (1),
la structure textile plate (30) présentant un tissu (30), **caractérisée en ce que** le tissu (30) présente une pluralité de fils de chaîne (30a) qui s'étendent au moins essentiellement dans la direction longitudinale (X) de la bande transporteuse (1) ou de la courroie (1),
le tissu (30) présentant au moins un fil de trame (30b) qui s'étend selon un angle (α) obliquement par rapport à la direction transversale (Y).

2. Bande transporteuse (1) ou courroie (1) selon la revendication 1, **caractérisée en ce que**
le fil de trame (30b) s'étend selon un angle (α) d'au moins environ 30°, de préférence d'environ 45°, par rapport à la direction transversale (Y).

3. Bande transporteuse (1) ou courroie (1) selon la revendication 1 ou 2,
**caractérisée en ce que**
au moins un fil de chaîne (30a), de préférence tous les fils de chaîne (30a), est réalisé pour se dissoudre lors de la vulcanisation de la bande transporteuse (1) ou de la courroie (1).

4. Bande transporteuse (1) ou courroie (1) selon la revendication 1 ou 2,
**caractérisée en ce que**
au moins un fil de chaîne (30a), de préférence tous les fils de chaîne (30a), est réalisé à partir du matériau élastomère de l'élément de base élastomère (2).

5. Bande transporteuse (1) ou courroie (1) selon la revendication 1, 2 ou 4,
**caractérisée en ce que**
au moins un fil de chaîne (30a), de préférence tous les fils de chaîne (30a), présente au moins la même élasticité que le matériau élastomère de l'élément de base élastomère (2), de préférence une élasticité supérieure.

6. Bande transporteuse (1) ou courroie (1) selon la revendication 1 ou 2,
**caractérisée en ce que**
au moins un fil de chaîne (30a), de préférence tous les fils de chaîne (30a), est réalisé pour se rompre sous une charge de flexion, de préférence à fibres fines/courtes.

7. Bande transporteuse (1) ou courroie (1) selon l'une quelconque des
revendications précédentes, **caractérisée en ce que**
le profilé latéral (4) est un profilé latéral fermé sans fin (4).

8. Bande transporteuse (1) ou courroie (1) selon l'une quelconque des
revendications précédentes, **caractérisée en ce que**
la couche adhésive (3) présente un matériau élastomère dans lequel la structure textile plate (30) est noyée au moins par sections, de préférence complètement.

9. Bande transporteuse (1) ou courroie (1) selon l'une quelconque des
revendications précédentes, **caractérisée en ce que**
l'élément de base élastomère (2) présente au moins par sections au moins un support de traction textile (24) qui est réalisé pour absorber des forces de traction au moins dans la direction longitudinale (X) de la bande transporteuse (1) ou de la courroie (1).

10. Bande transporteuse (1) ou courroie (1) selon la revendication 9, **caractérisée en ce que**
l'élément de traction textile (24) est noyé dans l'élément de base élastomère (2).

11. Bande transporteuse (1) ou courroie (1) selon l'une quelconque des revendications précédentes, **caractérisée en ce que**
l'élément de base élastomère (2) présente dans la direction transversale (Y) respectivement une zone de bord latérale (23) qui s'étend dans la direction longitudinale (X),
un profilé latéral (4) est agencé sur le côté supérieur (21) de chaque zone de bord latérale (23) de l'élément de base élastomère (2).

12. Bande transporteuse (1) ou courroie (1) selon l'une quelconque des
revendications précédentes, **caractérisée en ce que**
la bande transporteuse (1) ou la courroie (1) est réalisée sous forme de bande filtrante (1) et présente une pluralité de rainures transversales (22) qui s'étendent chacune au moins par sections dans la direction transversale (Y) et qui sont agencées à distance les unes des autres dans la direction longitudinale (X).
